# EUROPEAN PATENT SPECIFICATION

(11) **EP 2 151 419 B1**
(45) Date of publication and mention of the grant of the patent: **19.01.2011**
(21) Application number: 08162091.6
(22) Date of filing: 08.08.2008
(51) Int. Cl.: C03C 1/00, C03C 3/06, C03B 19/12

(54) **Sol-gel process for producing monolithic articles of vitreous silica**
Sol-Gel Verfahren zur Herstellung von monolithischen Gegenständen aus Quarzglas
Procédé sol-gel pour préparer des objets monolithiques en silice vitreuse

(43) Date of publication of application: 10.02.2010
(73) Proprietor: Orion Tech Anstalt, 9497 Triesenberg (LI)
(72) Inventor: Biglino, Marco, 16100 Genova (IT)
(74) Representative: Gervasi, Gemma

(56) References cited:
- EP-A- 0 586 013
- EP-A- 1 258 456
- EP-A- 1 661 866
- EP-A- 1 700 831
- EP-A- 1 897 860
- US-A- 5 207 814
- US-A- 5 236 483

## Description

### Field of the invention

The present invention relates to a sol-gel process for producing monolithic articles of vitreous silica. The present invention relates in particular to a sol-gel process for producing monolithic articles of vitreous silica, in which a colloidal silica suspension is reacted with at least one alkoxysilane to obtain a gel which is then dried and sintered.

### State of the art

Sol-gel processes are known in the art for producing vitreous silica articles for use in various sectors such as mechanical, electromechanical, aeronautical, high technology, extrusion processes and the like, in particular in the optical or electronic sector, such as optical fibres, UV ray-transparent moulds, lamp housings and the like.

Compared to traditional synthesis processes, the sol-gel technique enables a vitreous product to be obtained which is of high optical quality and high melting point with relatively low process temperatures, generally less than 1400 °C. Moreover, this technique enables monolithic articles to be obtained of the desired shape without the need for lengthy and complex mechanical machining and polishing processes.

For example, WO 01/53225 describes a sol-gel process for producing vitreous silica articles, in which a sol is produced by introducing an aqueous colloidal suspension into a solution of an organic silicon alkoxide, which hydrolyses to form fine aggregates of silica particles. Preferably the colloidal suspension comprises powdered silica. The sol thus obtained forms a hydrogel which is then dried and sintered to produce a dense glass article. The sol has a silica content exceeding 20%, preferably between 34 and 40%. Preferably the silicon alkoxide is a tetraalkoxysilane. In the sol, the molar ratio of silicon alkoxide to water is preferably between 1:4 and 1:20, more preferably between 1:6 and 1:10. The described examples indicate that a silicon alkoxide:water ratio outside said range leads to a mean particle size greater than the desired value of 10 microns. Preferably, the silica is Aerosil OX-50 pyrogenic silica with a silica:water molar ratio between 1:4 and 1:8.

EP 1700830 A1 describes a process for producing monoliths via a sol-gel process comprising the following steps: a) dispersing an oxide of pyrogenic origin (in particular silica) in water; b) hydrolyzing an alkoxide in an aqueous solution to form a hydrolyzate; c) mixing the alkoxide hydrolyzate with the oxide of pyrogenic origin to form a colloidal sol; d) possibly removing the coarse particles from the colloidal sol; e) gelling the colloidal sol in a mould; f) replacing the water present in the resultant aerogel with an organic solvent; g) drying the aerogel; h) thermally treating the dried aerogel. The silica content in the aqueous dispersion is between 5 and 80% by weight. In the examples a silica:alkoxide molar ratio of 2.0 is used. EP 1897860 A1 describes a sol-gel process for producing glass monoliths comprising: a) dispersing pyrogenic silica in water at acid pH; b) adding a silicon alkoxide to the dispersed silica in a silica/silicon alkoxide molar ratio from 2.5 to 5; c) adjusting the pH; d) pouring the sol into a container; e) gelling the sol to form a hydrogel; f) drying the hydrogel; g) sintering the dried gel to obtain a glass article free of defects and with an acceptable transmittance between 190 and 200 nm. In step a) the pH is adjusted to between 1.5 and 3.0, while in step c) the pH is adjusted to between 4.2 and 5.5 by adding ammonium hydroxide. After pouring the sol into a suitable container, the water present in the hydrogel pores is replaced with an aprotic solvent, it being considered that water has too high a critical point and can be aggressive both towards steel and towards the silica structure in the sol. Suitable solvents for this purpose are ketones, alcohols, acetates and alkanes. Particularly preferred are water-soluble solvents, for example acetone. From the examples given in said patent application, silica:alkoxide ratios from 2.13 to 5.37 and water:alkoxide ratios from 16.9 to 27.1 are obtained.

### Summary of the invention

The Applicant has ascertained that given the problems encountered with known technologies and following the teachings of the aforesaid patent applications, it is extremely difficult to obtain large dimension monolithic articles, for example articles of diameter exceeding 80 mm and weight exceeding 7 kg, as the number of rejects due to breakage is very high, such that the process cannot be implemented at an industrial level. Such difficulties were highly evident with articles of large dimensions and a small transfer surface, for example solid cylindrical pieces. After thorough analysis of various process conditions which can influence the final result, the Applicant surprisingly found that, by implementing a sol-gel process such as hereinafter defined, monolithic vitreous silica articles can be obtained substantially free of defects, with optimal optical properties, in particular in terms of UV (ultraviolet) and/or IR (infrared) radiation transmittance.

### Detailed description of the invention

According to a first aspect, the present invention therefore relates to a sol-gel process for producing monolithic articles of vitreous silica, comprising:
- preparing a dispersion of silica in water at acid pH;
- adding to said dispersion at least one alkoxysilane in a quantity such as to obtain a silica:alkoxysilane molar ratio between 6 and 30, preferably between 6.5 and 25, more preferably between 7 and 15;
- modifying the dispersion pH to obtain a sol;
- pouring the sol thus obtained into a mould;
- allowing the sol to gel to hence obtain a hydrogel;
- drying the hydrogel to obtain a dried gel;
- sintering the dried gel to obtain the vitreous silica article.

In the present description and in the claims which follow, except where otherwise indicated, the numerical ranges include all values comprised within the range, including the ends of the range.

With regard to the step of preparing the dispersion of silica in water, the pH is preferably brought to a value from 1.5 to 3.0, preferably from 2.0 to 2.5, by adding an acid, in particular an inorganic acid, for example hydrochloric acid, phosphoric acid, sulphuric acid or the like, or an organic acid, for example acetic acid. The silica is preferably pyrogenic silica. The preparation is generally conducted by adding the silica to the aqueous medium and dispersing it by mechanical stirring, for example with a mixer of Ultra-Turrax^{®} type or similar devices.

Preferably, said alkoxysilane is a tetraalkoxysilane in which each alkoxy group has from 1 to 6, preferably from 1 to 4, carbon atoms. More preferably, the tetraalkoxysilane is chosen from: tetraethoxysilane (TEOS), tetramethoxysilane (TMOS), methoxytriethoxysilane (MTEOS). Preferred for the specific application is tetraethoxysilane (TEOS).

According to a preferred embodiment, in said dispersion at acid pH, the molar ratio of water to alkoxysilane is between 40 and 200, preferably between 50 and 160, more preferably between 60 and 120. The Applicant has in fact surprisingly found that such a high molar ratio of water to alkoxysilane enables a different and better quality of the final product to be obtained, significantly reducing the formation of defects and/or breakages.

After adding the alkoxysilane and before modifying the pH, the dispersion temperature is preferably increased to a value between 30 and 50 °C for a time variable between 6 and 18 hours. The dispersion pH is then modified, in particular raised to a value generally between 4.0 and 6.0, preferably between 4.7 and 5.2. This pH modification can be achieved, for example, by adding a water-soluble inorganic or organic basic compound, for example ammonium hydroxide or amines, in particular cyclohexylamine.

Alternatively, an aminoalkyl-alkoxysilane can be used as the basic compound. Examples of products suitable for the purpose are: 3-aminopropyl-trimethoxysilane, 3-aminopropyl-triethoxysilane, 2-aminoethyl-3-aminopropyl-dimethoxysilane, 2-aminoethyl-3-aminopropyl-diethoxysilane, [3-(2-aminoethyl)aminopropyl]-trimethoxysilane, [3-(2-aminoethyl)aminopropyl]-triethoxysilane, or their mixtures. The use of an aminoalkyl-alkoxysilane enables sol gelling to be achieved without leaving in the final product ammonium salts or other by-products which can reduce the quality of the finished product.

The basic compound is preferably added under stirring so as to prevent excessive local pH increase which can cause premature gelling with consequent dishomogeneity in the final product.

Before gelling becomes apparent, the sol is poured into a mould and allowed to gel to hence obtain a hydrogel. In this manner the finished article of the required shape can be obtained, without the need for further mechanical machining and/or polishing steps. Evidently the mould is generally filled such as to avoid the inclusion of air, and the consequent defects formation in the final product. The mould can be made of various materials, for example plastic materials, metals, glass fibre, carbon fibre, ceramic, etc. Preferably the mould comprises plastic materials such as: polypropylene, polyethylene, polystyrene, fluorinated polymers (such as polytetrafluoroethylene), silicones. Gelling is preferably but not exclusively carried out at room temperature.

When gelling has been achieved, the hydrogel is dried to remove as much as possible the water present inside the gelled structure. According to a preferred embodiment, this drying is conducted by introducing the hydrogel into a thermal and humidity cycle oven. In this manner both the temperature and the degree of humidity under which the drying takes place can be controlled to hence prevent formation of internal stresses within the vitreous material due to disuniformities in the drying process.

In general, the drying time can vary within wide limits, depending on the various process parameters involved, in particular the dimensions and/or transfer area of the article to be produced. In general, the drying time can vary from a minimum of a few hours to 1200 hours, preferably between 600 and 900 hours. The temperature at which the drying step is conducted is preferably varied during the process, in general between 15°C and 120°C, preferably between 20 °C and 100 °C. The degree of humidity is also preferably varied during the drying process, in general between 30% and 100%. Preferably, the degree of humidity is maintained, for a time at least equal to 50% of the overall drying time, at values on an average greater than 70%, to then be gradually reduced to average values between 60% and 30%.

This drying process therefore requires no process of replacing the water present in the hydrogel with an organic solvent, contrary to what suggested in the aforesaid patent applications EP 1700830 A1 and EP 1897860 A1, and enables a final product of high quality to be obtained in a short time, without the need to use organic solvents which would have then to be removed, for example by treatment in an autoclave, and disposed of.

With regard to the process of sintering the dried gel, this can be carried out by overall known methods. In general this process comprises three steps:
1) calcining in an oxygen atmosphere;
2) dehydration and purification in the presence of at least one chlorinated product;
3) consolidation in an inert atmosphere.

With regard to the first step, this is generally but not exclusively carried out in a kiln at a temperature between 30°C and 60°C, with repeated steps of drawing off and feeding oxygen to eliminate the combustion products formed.

The second step is generally carried out in a kiln at a temperature between 60°C and 80°C, in the presence of chlorinated products, such as HCl and/or SOCl₂ using for example helium as a carrier, with a He:HCl ratio of about 10:1. Consolidation, leading to material densification, is generally carried out in a helium atmosphere, possibly with traces of oxygen, at a temperature between 800°C and 1400°C.

The present invention is further illustrated hereinafter by some embodiments provided as non-limiting examples of the extent of the invention.

### EXAMPLES 1-7

Following the operative modalities of examples 1-4 of patent application EP 1897860 A1, vitreous silica samples of cylindrical shape were produced having final dimensions of 125 mm diameter and 90 mm height.

The different operative conditions used in the various examples are reproduced in Table 1. The process method was as follows.

A quantity P₁ of colloidal silica powder (Aerosil^{®} EG 50 of Degussa AG) was added to a volume V₁ of 0.001 N HCl, under stirring using an Ultra-Turrax^{®} mixer. The dispersion was transferred into a reactor and a volume V₂ of tetraethoxysilane (TEOS) was added.

After about 16 hours a 0.1 N ammonium hydroxide solution was added dropwise to the dispersion until a pH of 4.91 was obtained. The sol obtained in this manner was poured into various moulds of cylindrical shape.

After about 12 hours the hydrogel samples thus obtained were washed repeatedly with water and then introduced into a thermal and humidity cycle oven to remove the water present.

The dried gel was then sintered by: calcining at 600°C in an oxidizing atmosphere for 5 hours; dehydration and purification in a helium flow containing 2% of chlorine at 600 °C for 30 min; consolidation in a helium atmosphere at a temperature of 1400°C for 1 hour.

With regard to Examples 1-4 (comparative), the Applicant observed that the samples are prone to breakage already during the gelling step, so preventing the process to be completed with the subsequent drying and sintering steps. In contrast, all samples obtained in Examples 5-12 (invention) reached the end of the production process perfectly whole and free of defects.

**TABLE 1**

| Example | 0.01 N HCl | | SiO₂ | | | TEOS | | | Molar Ratio SiO₂:TEOS | Molar Ratio H₂O:TEOS |
|---|---|---|---|---|---|---|---|---|---|---|
| | V₁ (litres) | moles H₂O | P₁ (kg) | conc. SiO₂ (% w/w) | moles SiO₂ | V₂ (litres) | P₂ (kg) | moles TEOS | | |
| 1 (*) | 12.357 | 0.687 | 5.19 | 29.6 | 0.086 | 9.120 | 8.46 | 0.0406 | 2.13 | 16.9 |
| 2 (*) | 12.500 | 0.694 | 5.28 | 29.7 | 0.088 | 7.120 | 6.61 | 0.0317 | 2.77 | 21.9 |
| 3 (*) | 21.000 | 1.167 | 9.00 | 30.0 | 0.150 | 8.092 | 7.51 | 0.0360 | 4.15 | 32.4 |
| 4 (*) | 11.270 | 0.626 | 7.44 | 39.8 | 0.124 | 5.180 | 4.81 | 0.0231 | 5.37 | 27.1 |
| 5 | 13.778 | 0.765 | 5.906 | 30.0 | 0.098 | 3.182 | 2.953 | 0.0142 | 6.93 | 54.0 |
| 6 | 7.797 | 0.433 | 3.341 | 30.0 | 0.056 | 1.477 | 1.371 | 0.0066 | 8.45 | 65.8 |
| 7 | 7.547 | 0.419 | 3.234 | 30.0 | 0.0538 | 1.268 | 1.177 | 0.0056 | 9.52 | 74.2 |
| 8 | 6.656 | 0.370 | 2.921 | 30.5 | 0.0486 | 1.078 | 1.000 | 0.0048 | 10.13 | 77.0 |
| 9 | 5.917 | 0.329 | 2.303 | 28.0 | 0.0383 | 0.754 | 0.700 | 0.0034 | 11.40 | 97.8 |
| 10 | 5.874 | 0.326 | 2.555 | 30.3 | 0.0425 | 0.689 | 0.639 | 0.0031 | 13.86 | 106.4 |
| 11 | 6.210 | 0.345 | 2.734 | 30.6 | 0.0455 | 0.591 | 0.548 | 0.0026 | 17.29 | 131.2 |
| 12 | 6.656 | 0.370 | 2.878 | 30.2 | 0.0479 | 0.522 | 0.484 | 0.0023 | 20.61 | 159.2 |

| | | | | | | | | | | |
|---|---|---|---|---|---|---|---|---|---|---|
| (*) Comparative (corresponding to Examples 1-4 of EP 1897860 A1) | | | | | | | | | | |

| | Density | MW |
|---|---|---|
| Water | 1 | 18 |
| SiO₂ | --- | 60.1 |
| TEOS | 0.928 | 208.33 |

## Claims

1. Sol-gel process for producing monolithic articles of vitreous silica, comprising:
- preparing a dispersion of silica in water at acid pH;
- adding to said dispersion at least one alkoxysilane in a quantity such as to obtain a silica:alkoxysilane molar ratio between 6 and 30, and a water:alkoxysilane molar ratio between 40 and 200;
- modifying the dispersion pH to obtain a sol;
- pouring the sol thus obtained into a mould;
- allowing the sol to gel to hence obtain a hydrogel;
- drying the hydrogel to obtain a dried gel;
- sintering the dried gel to obtain the vitreous silica article.

2. Process according to claim 1, wherein the silica:alkoxysilane molar ratio is between 6.5 and 25, preferably between 7 and 15.

3. Process according to claim 1, wherein during the step of preparing the silica dispersion in water, the pH is brought to a value from 1.5 to 3.0, preferably from 2.0 to 2.5.

4. Process according to claim 1, wherein the silica is pyrogenic silica.

5. Process according to claim 1, wherein the alkoxysilane is a tetraalkoxysilane in which each alkoxy group has from 1 to 6, preferably from 1 to 4, carbon atoms; more preferably, the alkoxysilane is chosen from: tetraethoxysilane (TEOS), tetramethoxysilane (TMOS), methoxytriethoxysilane (MTEOS).

6. Process according to claim 1, wherein the molar ratio of water to alkoxysilane is between 50 and 160, preferably between 60 and 120.

7. Process according to claim 1, wherein after adding the alkoxysilane and before modifying the pH value, the dispersion temperature is increased to a value between 30 and 50 °C in a time variable between 6 and 18 hours.

8. Process according to claim 1, wherein the step of modifying the dispersion pH comprises raising the pH to a value generally between 4.0 and 6.0, preferably between 4.7 and 5.2.

9. Process according to claim 8, wherein the step of raising the pH comprises adding ammonium hydroxide or an amine.

10. Process according to claim 8, wherein the step of raising the pH comprises adding an aminoalkyl alkoxysilane; the aminoalkyl alkoxysilane is preferably chosen from 3-aminopropyl-trimethoxysilane, 3-aminopropyl-triethoxysilane, 2-aminoethyl-3-aminopropyl-dimethoxysilane, 2-aminoethyl-3-aminopropyl-diethoxysilane, [3-(2-aminoethyl)aminopropyl]-trimethoxysilane, [3-(2-aminoethyl)aminopropyl]-triethoxysilane, or their mixtures.

11. Process according to claim 1, wherein the hydrogel drying step is implemented by a thermal and humidity cycle oven.

12. Process according to claim 11, wherein the drying time varies between 400 and 1200 hours, preferably between 600 and 900 hours.

13. Process according to claim 11, wherein the temperature at which the drying step is conducted is varied, during the step itself, between 15 °C and 120°C, preferably between 20 °C and 100 °C.

14. Process according to claim 1, wherein the degree of humidity at which the drying step is conducted is varied, during the step itself, between 30% and 100%.

15. Process according to claim 14, wherein the degree of humidity is maintained, for a time at least equal to 50% of the overall drying time, at values on an average greater than 70%, to then be gradually reduced to average values between 60% and 30%.

16. Process according to claim 1, wherein the sintering step comprises:
- calcining in an oxygen atmosphere;
- dehydration and purification in the presence of at least one chlorinated product;
- consolidation in an inert atmosphere.

17. Process according to claim 16, wherein the calcining step is carried out in a kiln at a temperature between 30 °C and 600 °C.

18. Process according to claim 16, wherein the dehydration step is carried out in a kiln at a temperature between 600 °C and 800 °C, in the presence of chlorinated products.

19. Process according to claim 16, wherein the consolidation step is conducted in a helium atmosphere, possibly with oxygen traces, at a temperature between 800 °C and 1400°C.

## Patentansprüche

1. Sol-Gel-Verfahren zur Herstellung monolitischer Gegenstände aus glasartigem Siliciumoxid, umfassend:
- Herstellen einer Dispersion von Siliciumoxid in Wasser bei einem sauren pH-Wert;
- Zusetzen wenigstens eines Alkoxysilans zu der Dispersion in einer derartigen Menge, dass man ein Siliciumoxid:Alkoxysilan-Mol-Verhältnis zwischen 6 und 30 und ein Wasser:Alkoxysilan-Mol-Verhältnis zwischen 40 und 200 erhält;
- Modifizieren des pH-Wertes der Dispersion unter Erhalt eines Sols;
- Gießen des so erhaltenen Sols in eine Form;
- Gelieren-lassen des Sols, um so ein Hydrogel zu erhalten;
- Trocknen des Hydrogels unter Erhalt eines getrockneten Gels;
- Sintern des getrockneten Gels unter Erhalt des Gegenstandes aus glasartigem Siliciumoxid.

2. Verfahren nach Anspruch 1, worin das Siliciumoxid:Alkoxysilan-Mol-Verhältnis zwischen 6,5 und 25 liegt, vorzugsweise zwischen 7 und 15.

3. Verfahren nach Anspruch 1, worin der pH-Wert während des Schritts der Herstellung der Siliciumoxid-Dispersion in Wasser auf einen Wert von 1,5 bis 3,0 gebracht wird, vorzugsweise von 2,0 bis 2,5.

4. Verfahren nach Anspruch 1, worin das Siliciumoxid ein pyrogenes Siliciumoxid ist.

5. Verfahren nach Anspruch 1, worin das Alkoxysilan ein Tetraalkoxysilan ist, in dem jede Alkoxy-Gruppe 1 bis 6 Kohlenstoff-Atome aufweist, vorzugsweise 1 bis 4 Kohlenstoff-Atome, noch mehr bevorzugt worin das Alkoxysilan gewählt ist aus Tetraethoxysilian (TEOS), Tetramethoxysilan (TMOS), Methoxytriethoxysilan (MTEOS).

6. Verfahren nach Anspruch 1, worin das Mol-Verhältnis Wasser:Alkoxysilan zwischen 50 und 160 liegt, vorzugsweise zwischen 60 und 120.

7. Verfahren nach Anspruch 1, worin die Temperatur der Dispersion nach dem Zusetzen des Alkoxysilans und vor dem Modifizieren des pH-Wertes auf einen Wert zwischen 30 und 50 °C in einer Zeit erhöht wird, die zwischen 6 und 18 Stunden variabel ist.

8. Verfahren nach Anspruch 1, worin der Schritt des Modifizierens des pH-Wertes der Dispersion ein Anheben des pH-Wertes auf einen Wert allgemein zwischen 4,0 und 6,0 umfasst, vorzugsweise zwischen 4,7 und 5,2.

9. Verfahren nach Anspruch 8, worin der Schritt des Anhebens des pH-Wertes ein Zusetzen von Ammoniumhydroxid oder eines Amins umfasst.

10. Verfahren nach Anspruch 8, worin der Schritt des Anhebens des pH-Wertes ein Zusetzen eines Aminoalkylalkoxysilans umfasst, das Aminoalkoxysilan ist vorzugsweise gewählt aus 3-Aminopropyltrimethoxysilan, 3-Aminopropyltriethoxysilan, 2-Aminoethyl-3-aminopropyldimethoxysilan, 2-Aminoethyl-3-aminopropyldiethoxysilan, [3-(2-Aminoethyl-)aminopropyl-]trimethoxysilan, [3-(2-Aminoethyl-)aminopropyl-]triethoxysilan oder deren Mischungen.

11. Verfahren nach Anspruch 1, worin der Schritt des Trocknens des Hydrogels implementiert wird mittels eines thermischen und Feuchtigkeitszyklus-Ofens.

12. Verfahren nach Anspruch 11, worin die Trocknungszeit schwankt zwischen 400 und 1.200 Stunden, vorzugsweise zwischen 600 und 900 Stunden.

13. Verfahren nach Anspruch 11, worin die Temperatur, bei der der Trocknungsschritt durchgeführt wird, während des Schritts selbst variiert wird zwischen 15 °C und 120 °C, vorzugsweise zwischen 20 °C und 100 °C.

14. Verfahren nach Anspruch 1, worin der Grad an Feuchtigkeit, bei der der Trocknungsschritt durchgeführt wird, während des Schritts selbst variiert wird zwischen 30 % und 100 %.

15. Verfahren nach Anspruch 14, worin der Grad an Feuchtigkeit für eine Zeit aufrechterhalten wird, die wenigstens gleich 50 % der Gesamttrocknungszeit ist, bei Werten im Durchschnitt größer als 70 %, um dann schrittweise auf mittlere Werte zwischen 60 % und 30 % reduziert zu werden.

16. Verfahren nach Anspruch 1, worin der Sinter-Schritt umfasst:
- Calcinieren in einer Sauerstoff-Atmosphäre;
- Dehydratation und Reinigung in Gegenwart wenigstens eines chlorierten Produkts;
- Konsolidieren in einer inerten Atmosphäre.

17. Verfahren nach Anspruch 16, worin der Calcinierungsschritt durchgeführt wird in einem Röst-Ofen bei einer Temperatur zwischen 30 °C und 600 °C.

18. Verfahren nach Anspruch 16, worin der Dehydratationsschritt durchgeführt wird in einem Röst-Ofen bei einer Temperatur zwischen 600 °C und 800 °C in Gegenwart von chlorierten Produkten.

19. Verfahren nach Anspruch 16, worin der Konsolidierungsschritt durchgeführt wird in einer Helium-Atmosphäre, möglicherweise mit Spuren von Sauerstoff, bei einer Temperatur zwischen 800 °C und 1.400 °C.

## Revendications

1. Procédé sol-gel pour préparer des articles monolithiques en silice vitreuse, consistant à :
- préparer une dispersion de silice dans de l'eau à un pH acide ;
- ajouter à ladite dispersion au moins un alcoxysilane dans une quantité permettant d'obtenir un rapport molaire silice:alcoxysilane entre 6 et 30, et un rapport molaire eau:alcoxysilane entre 40 et 200 ;
- modifier le pH de la dispersion pour obtenir un sol ;
- verser le sol ainsi obtenu dans un moule;
- permettre au sol de geler pour obtenir ainsi un hydrogel ;
- sécher l'hydrogel pour obtenir un gel sec;
- fritter le gel sec pour obtenir l'article de silice vitreuse.

2. Procédé selon la revendication 1, dans lequel le rapport molaire silice:alcoxysilane est compris entre 6,5 et 25, de préférence, entre 7 et 15.

3. Procédé selon la revendication 1, dans lequel pendant l'étape de préparation de la dispersion de silice dans de l'eau, le pH est amené à une valeur de 1,5 à 3,0, de préférence, de 2,0 à 2,5.

4. Procédé selon la revendication 1, dans lequel la silice est une silice pyrogène.

5. Procédé selon la revendication 1, dans lequel l'alcoxysilane est un tétraalcoxysilane dans lequel chaque groupe alcoxy a de 1 à 6, de préférence, de 1 à 4, atomes de carbone ; plus préférablement, l'alcoxysilane est choisi parmi: le tétraéthoxysilane (TEOS), le tétraméthoxysilane (TMOS), le méthoxytriéthoxysilane (MTEOS).

6. Procédé selon la revendication 1, dans lequel le rapport molaire de l'eau sur l'alcoxysilane est compris entre 50 et 160, de préférence, entre 60 et 120.

7. Procédé selon la revendication 1, dans lequel après ajout de l'alcoxysilane et avant modification de la valeur de pH, la température de la dispersion est augmentée à une valeur entre 30 et 50 °C en un temps variable entre 6 et 18 heures.

8. Procédé selon la revendication 1, dans lequel l'étape de modification du pH de la dispersion comprend l'augmentation du pH à une valeur généralement comprise entre 4,0 et 6,0, de préférence, entre 4,7 et 5,2.

9. Procédé selon la revendication 8, dans lequel l'étape d'augmentation du pH comprend l'ajout d'un hydroxyde d'ammonium ou d'une amine.

10. Procédé selon la revendication 8, dans lequel l'étape d'augmentation du pH comprend l'ajout d'un alcoxysilane d'aminoalkyle ; l'alcoxysilane d'aminoalkyle est de préférence choisi parmi le 3-aminopropyl-triméthoxysilane, le 3-aminopropyl-triéthoxysilane, le 2-aminoéthyl-3-aminopropyl-diméthoxysilane, le 2-aminoéthyl-3-aminopropyl-diéthoxysilane, le [3-(2-aminoéthyl)aminopropyl]-triméthoxysilane, le [3-(2-aminoéthyl)aminopropyl]-triéthoxysilane, ou leurs mélanges.

11. Procédé selon la revendication 1, dans lequel l'étape de séchage de l'hydrogel est mise en oeuvre par un four à cycle thermique et d'humidité.

12. Procédé selon la revendication 11, dans lequel le temps de séchage varie entre 400 et 1 200 heures, de préférence, entre 600 et 900 heures.

13. Procédé selon la revendication 11, dans lequel la température à laquelle l'étape de séchage est opérée varie, pendant l'étape elle-même, entre 15 °C et 120 °C, de préférence, entre 20 °C et 100 °C.

14. Procédé selon la revendication 1, dans lequel le degré d'humidité auquel l'étape de séchage est opérée varie, pendant l'étape elle-même, entre 30 % et 100 %.

15. Procédé selon la revendication 14, dans lequel le degré d'humidité est maintenu, pendant un certain temps au moins égal à 50 % du temps de séchage total, à des valeurs supérieures en moyenne à 70 %, pour être ensuite progressivement réduites à des valeurs moyennes entre 60 % et 30 %.

16. Procédé selon la revendication 1, dans lequel l'étape de frittage comprend:
- la calcination dans une atmosphère d'oxygène;
- la déshydratation et purification en la présence d'au moins un produit chloré ;
- la consolidation dans une atmosphère inerte.

17. Procédé selon la revendication 16, dans lequel l'étape de calcination est effectuée dans un four à une température entre 30 °C et 600 °C.

18. Procédé selon la revendication 16, dans lequel l'étape de déshydratation est effectuée dans un four à une température comprise entre 600 °C et 800 °C en la présence de produits chlorés.

19. Procédé selon la revendication 16, dans lequel l'étape de consolidation est opérée dans une atmosphère d'hélium, comprenant probablement des traces d'oxygène, à une température comprise entre 800 °C et 1 400 °C.
